(19) Europäisches Patentamt
European Patent Office
Office européen des brevets

(11) Numéro de publication: **0 287 174**
**A1**

# (12) DEMANDE DE BREVET EUROPEEN

(21) Numéro de dépôt: **88200698.4**

(51) Int. Cl.⁴: **H04N 11/08**

(22) Date de dépôt: **11.04.88**

(30) Priorité: **17.04.87 FR 8705530**

(43) Date de publication de la demande:
**19.10.88 Bulletin 88/42**

(84) Etats contractants désignés:
**DE FR GB IT**

(71) Demandeur: **LA RADIOTECHNIQUE INDUSTRIELLE ET COMMERCIALE Société Anonyme dite:**
**51, rue Carnot BP 301**
**F-92156 Suresnes(FR)**

(84) **FR**

(71) Demandeur: **N.V. Philips' Gloeilampenfabrieken**
**Groenewoudseweg 1**
**NL-5621 BA Eindhoven(NL)**

(84) **DE GB IT**

(72) Inventeur: **Hofelt, Marten Société Civile S.P.I.D.**
**209, rue de l'Université**
**F-75007 Paris(FR)**
Inventeur: **Rakhodai, Issa Société Civile S.P.I.D.**
**209, rue de l'Université**
**F-75007 Paris(FR)**

(74) Mandataire: **Caron, Jean et al**
**SOCIETE CIVILE S.P.I.D. 209, rue de l'Université**
**F-75007 Paris(FR)**

## (54) Dispositif d'anamorphose et système muni d'un tel dispositif.

(57) Dans un récepteur MAC, le dispositif réalise une conversion de format, pour passer par exemple d'un format 16/9 à un format 4/3. Ceci est obtenu habituellement en relisant dans des mémoires de pixels, préexistantes dans le récepteur, à une vitesse inférieure à celle d'écriture.

Dans le but de conserver la vitesse normale de fourniture des pixels en sortie du dispositif, les générateurs d'adresse de mémoire sont modifiés pour que, sans modification de la vitesse d'horloge, la lecture dans les mémoires soit réalisée avec, à intervalle régulier, relecture d'une même valeur deux fois de suite.

Par rapport aux pixels qui seraient obtenus en lisant à vitesse réduite (ligne 50), on obtient des pixels (ligne 51) à vitesse normale, et les valeurs ainsi lues sont ensuite additionnées deux par deux avec une pondération (i, j, k, l) qui varie à chaque temps d'horloge (ligne 52), le même cycle revenant périodiquement avec la même périodicité que les relectures.

50
P1
P2
P3
P4
10,125 MHz
n-1
n
n+1
n+2
n+3
m
51
P1
P1
P2
P3
P4
P4
13,5MHz
52
jP1 +kP1
lP1 +ijP2
jP2 +kP3
klP3 +iP4
jP4 +kP4
FIG.6

EP 0 287 174 A1

Xerox Copy Centre

# Dispositif d'anamorphose et système muni d'un tel dispositif

L'invention concerne un dispositif pour l'anamorphose d'une image, c'est-à-dire sa dilatation dans une direction, dispositif faisant partie d'un appareil qui reproduit une image selon un mode d'exploration par lignes et trames, à partir d'un signal dans lequel chaque ligne donne lieu à un multiplexage temporel de signaux de différence de couleur et de luminance, l'appareil étant muni d'au moins une mémoire de pixels pour emmagasiner sous forme numérique des multiplets représentant chacun une valeur de définition d'un pixel, et d'un générateur d'adresses qui procède à un calcul d'incrémentation d'adresse, au rythme d'une horloge à fréquence de pixels, et fournit à chaque instant correspondant à la reproduction d'un pixel, l'adresse, dans ladite mémoire, du multiplet définissant ce pixel.

Un tel dispositif est utilisé notamment afin d'adapter un système dont l'écran d'affichage a un rapport de 4/3 entre la largeur et la hauteur d'image, pour la réception d'images émises avec un rapport, qui sera ci-après appelé format, de 16/9. Un tel format est prévu notamment dans la norme D2MAC pour la transmission de films de cinéma.

Pour obtenir le format 16/9 sur l'écran d'un appareil récepteur de format 4/3, le moyen le plus simple consiste à réduire de 25% l'amplitude du balayage vertical, par exemple en réduisant la tension d'alimentation du circuit de balayage vertical. Ce moyen nécessite une intervention à l'intérieur du récepteur, et il est donc malheureusement impossible de l'utiliser dans les téléviseurs du parc existant où cette possibilité n'est pas prévue à l'origine. En outre la surface d'écran n'est alors pas pleinement utilisée.

Il faut donc prévoir un dispositif capable de fournir à un téléviseur standard au format 4/3 des signaux tels que, sans aucune modification du téléviseur, ce dernier puisse exploiter une image au format 16/9. Si on appliquait directement à un tel téléviseur le signal émis selon le format 16/9, les proportions reproduites seraient déformées et par exemple un carré deviendrait un rectangle de grand axe vertical.

Un compromis satisfaisant consiste à tronquer l'image 16/9 en lui enlevant de chaque côté une bande verticale représentant chacune 12,5% de la largeur totale. L'image a alors un format 4/3. Mais ceci ne suffit pas : le temps utile de balayage ligne étant le même dans les deux formats, la partie réduite de ligne a une durée également réduite et n'occupera donc que les 3/4 d'une ligne de récepteur : il faut par conséquent étaler dans le temps avec un rapport 4/3 la transmission de cette partie de ligne.

Le dispositif de l'invention a pour objet particulier de réaliser cette fonction et il peut, en général, servir à toute opération de dilatation dans le temps d'un signal. Les normes MAC prévoient de comprimer les données de luminance et de différence de couleur pour les transmettre en multiplexage temporel. Par conséquent les systèmes récepteurs sont munis de circuits pour dilater les données. Cette dilatation est obtenue au moyen d'une mémoire de ligne qui est remplie, ou écrite, en temps réel au fur et a mesure que les données sont reçues, puis est relue à vitesse moindre. Les valeurs sont les suivantes : l'écriture se fait à 20,25 MHz, puis la lecture se fait à 13,5 MHz en ce qui concerne la luminance et à 6,75 MHz en ce qui concerne la différence de couleur.

Pour obtenir un étalement de 4/3 dans le temps, il suffirait de relire les positions de la mémoire qui correspondent à la partie centrale qu'il faut conserver dans chaque ligne, à une vitesse de 10,125 MHz (au lieu de 13,5) pour la luminance et à 5,0625 MHz (au lieu de 6,75) pour la couleur. Cependant cette méthode présente un inconvénient : le signal numérique étant par la suite converti en signal analogique qui est ensuite filtré, les caractéristiques de filtrage sont différentes à cause de la fréquence d'échantillonnage plus basse ce qui coûte donc un filtre supplémentaire ainsi qu'un commutateur pour mettre ce filtre en service.

Une autre méthode consiste en l'emploi d'un filtre numérique interpolateur : l'invention se propose de tirer parti du fait qu'il existe déjà dans un décodeur MAC un système comportant une mémoire et un générateur d'adresse associé, pour réaliser un tel filtre d'une manière particulièrement simple.

A cet effet, le dispositif selon l'invention est notamment remarquable en ce qu'il est muni d'un registre à décalage pour recevoir à son entrée le multiplet lu dans la mémoire à l'adresse indiquée par le générateur d'adresses, registre muni d'une sortie par position pour fournir à chaque fois le multiplet contenu dans cette position, en ce que ces sorties sont reliées chacune à un circuit de calcul pour appliquer une pondération à la valeur représentée par le multiplet, en ce que les sorties de ces circuits de calcul sont reliées à des entrées d'un circuit d'addition dont la sortie fournit les valeurs de pixels en ce que les coefficients de pondération des circuits de calcul sont modifiées au rythme de l'horloge de pixels qui a la même vitesse que pour une image de format non converti, et en ce que le générateur d'adresses est muni de moyens pour supprimer périodiquement l'incrémentation d'adresse de lecture avec une périodicité telle que la proportion entre le nombre total d'impulsions d'horloge avec ou sans incrémentation d'adresse et le nombre d'impulsions avec incrémentation soit égale au rapport de conversion de format.

Cette forme de réalisation est particulièrement avantageuse car elle nécessite seulement une adjonction peu importante aux circuits préexistants.

Dans une forme de réalisation simple, le registre à décalage comporte deux positions. Pour obtenir la dilatation de 4/3 mentionnée plus haut, l'adresse fournie par le générateur d'adresse est incrémentée trois fois de suite, après quoi l'incrémentation est arrêtée pour une quatrième impulsion d'horloge.

Dans un système de réception de télévision selon le standard MAC comportant des mémoires de désembrouillage et un générateur d'adresse associé, le dispositif selon l'invention est avantageusement associé à ces mémoires et à leur générateur d'adresses de lecture.

La description qui va suivre, en regard des dessins annexés décrivant des exemples non limitatifs fera bien comprendre comment l'invention peut être réalisée.

Les figures 1A à 1D représentent des images avec les résultats obtenus selon différents procédés.

La figure 2 représente schématiquement une partie d'un système de réception de télévision selon le standard MAC.

La figure 3 représente schématiquement un circuit selon l'invention.

La figure 4 est un tableau illustrant le contenu, au cours du temps, du registre 27 de la figure 3 et les coefficients de pondération.

La figure 5 représente plus en détail sous une forme fonctionnelle un mode de réalisation d'éléments de la figure 3.

La figure 6 est un diagramme de temps illustrant le principe de la conversion.

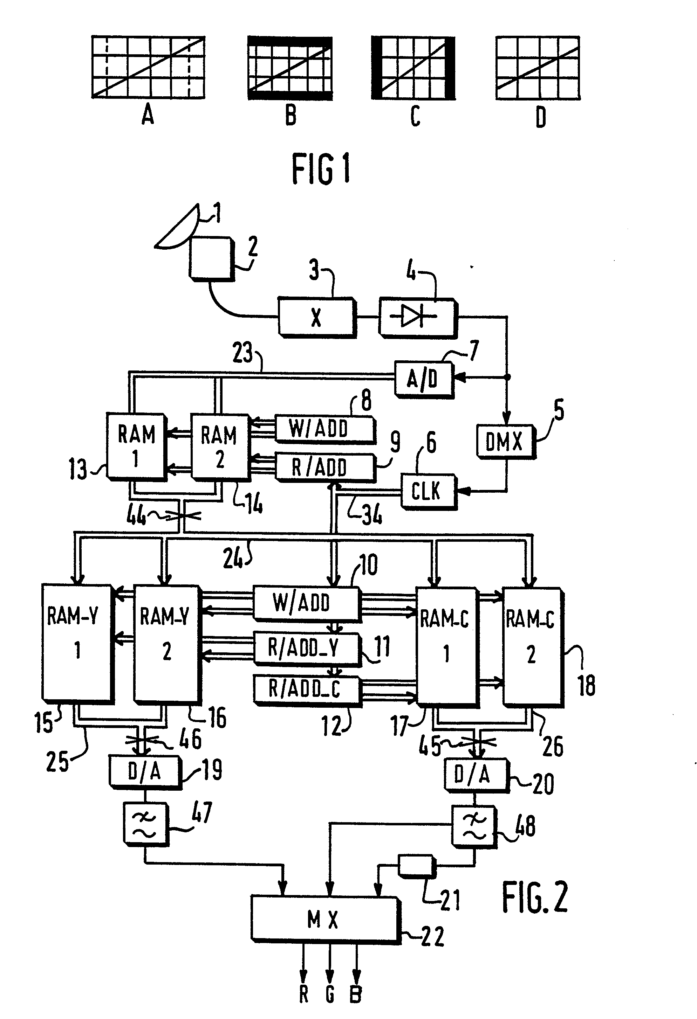

L'image représentée en A sur la figure 1 est au format 16/9, et elle comporte des damiers carrés et une diagonale. Les pointillés verticaux délimitent une image de format 4/3 avec perte de deux bandes verticales latérales. Si l'on peut à la réception commuter l'amplitude verticale du balayage, on peut obtenir l'image B sans perte de parties d'image ; par contre la surface d'écran n'est pas pleinement utilisée.

Lors d'un balayage à 625 lignes par image, la durée utile d'une ligne est de 51,6µS. Si on lit à cette vitesse l'image A complète en n'en transmettant que la partie située entre les pointillés, on obtient l'image C à la réception en format 4/3. Il manque les bords droit et gauche mais surtout les carrés sont devenus des rectangles verticaux de rapport 4/3 ! Pour corriger cette déformation il faut que les 3/4 de ligne d'une image au format 16/9 qui sont lus normalement en $51,6 \times 3/4 = 38,7\mu S$ soient étalés dans le temps pour être fournis au récepteur de format 4/3 en 51,6 µS, ce qui donne l'image D, à laquelle il manque une partie (la diagonale n'aboutit pas dans l'angle), mais dont les damiers sont carrés.

La figure 2 représente les éléments d'un système de réception D2MAC, à l'exception du dispositif d'affichage proprement dit qui peut être constitué par un récepteur standard, par exemple de type SECAM ou PAL, muni de préférence d'une prise de péritélévision. Ces éléments sont connus et ne sont présentés ici que pour illustrer comment le dispositif selon l'invention y est incorporé. A partir d'une antenne 1 a lieu un premier changement de fréquence dans une tête de réception 2 située en général à proximité de l'antenne. Après transmission par un câble le signal atteint un deuxième changeur de fréquence 3 puis un démodulateur 4, à la sortie duquel est disponible le signal en bande de base. Celui-ci comporte des parties numériques dites duobinaires à partir desquelles le décodeur duobinaire 5 suivi de l'horloge 6 fournit sur un conducteur multifils 34 tous les signaux de synchronisation nécessaires et une horloge à 20,25 MHz ou à un multiple de cette fréquence. La sortie du démodulateur 4 est aussi reliée à l'entrée d'un convertisseur analogique/numérique 7 à la sortie duquel sont disponibles sur un bus 23 des multiplets décrivant des échantillons successifs de signal, à la fréquence de 20,25 MHz. On reçoit d'abord des échantillons de différence de couleur pendant 17,2µS puis des échantillons de luminance Y pendant 34,4µS. Alternativement d'une ligne à l'autre les échantillons de différence de couleur sont dits "bleus" ou "rouges".

Les éléments 8, 9, 13, 14 sont optionnels et seront décrits plus tard. On suppose pour le moment que le bus 23 est relié au bus 24. Les éléments situés sur le dessin en dessous du bus 24 servent à réaliser le démultiplexage temporel et le matriçage des signaux de luminance et de couleur.

Les mémoires 15 à 18 sont des mémoires vives à accès direct. Le groupe des mémoires 15 et 16 concerne la luminance et celui des mémoires 17 et 18 la différence de couleur. Les deux mémoires de chacun de ces groupes sont utilisées alternativement en lecture et en écriture. Au cours d'une ligne d'image, le générateur d'adresse 10, synchronisé par les données disponibles sur le conducteur d'horloge 34, fournit aux mémoires 17 et 15 successivement un ordre d'écriture et les adresses correspondantes qui sont incrémentées au cours du temps, de façon à écrire successivement la mémoire 17 puis la mémoire 15 à partir de données présentées sur le bus 24, tandis que pendant cette même ligne les générateurs d'adresse 11 et 12 fournissent ensemble un ordre de lecture et des adresses aux mémoires 16 et 18 pour lire ensemble leurs contenus fournis sur les bus 25 et 26. A la ligne suivante il y a interversion des mémoires : 15 pour 16, et 17 pour 18. Pour une restitution normale les mémoires sont lues à la vitesse de 13,5 MHz pour la luminance et 6,75 Mhz pour la couleur. Bien entendu il existe des liaisons non représentées entre l'horloge et tous les éléments dont le fonctionnement implique une opération périodique.

A chacun des bus 25 et 26 respectivement est connecté un convertisseur numérique/analogique 19 et 20 dont les sorties sont reliées via des filtres 47 et 48 au circuit analogique de matriçage 22 qui fournit les signaux de couleur R, G, B. La ligne à retard 21, de 64µS, permet de disposer ensemble des différences de couleur rouge et bleu.

Dans un but de simplification, un seul mode de réalisation est décrit ici, mais d'autres organisations sont connues, par exemple le matriçage des différences de couleur peut être réalisé par des circuits numériques à la sortie desquels sont placés deux convertisseurs numérique/analogique (un par couleur) au lieu d'un seul (20), la ligne à retard 21 étant alors inutile. Les variantes possibles après la sortie des mémoires n'ont pas d'incidence sur l'invention.

Afin de représenter seulement une partie centrale représentant les 3/4 d'une ligne, l'adresse pour le départ de la lecture d'une ligne, fournie par les générateurs d'adresses 11 et 12, correspond à la fin du premier huitième de ligne dans les mémoires. Selon l'invention ces générateurs sont munis de moyens pour supprimer périodiquement l'incrémentation d'adresse de lecture.

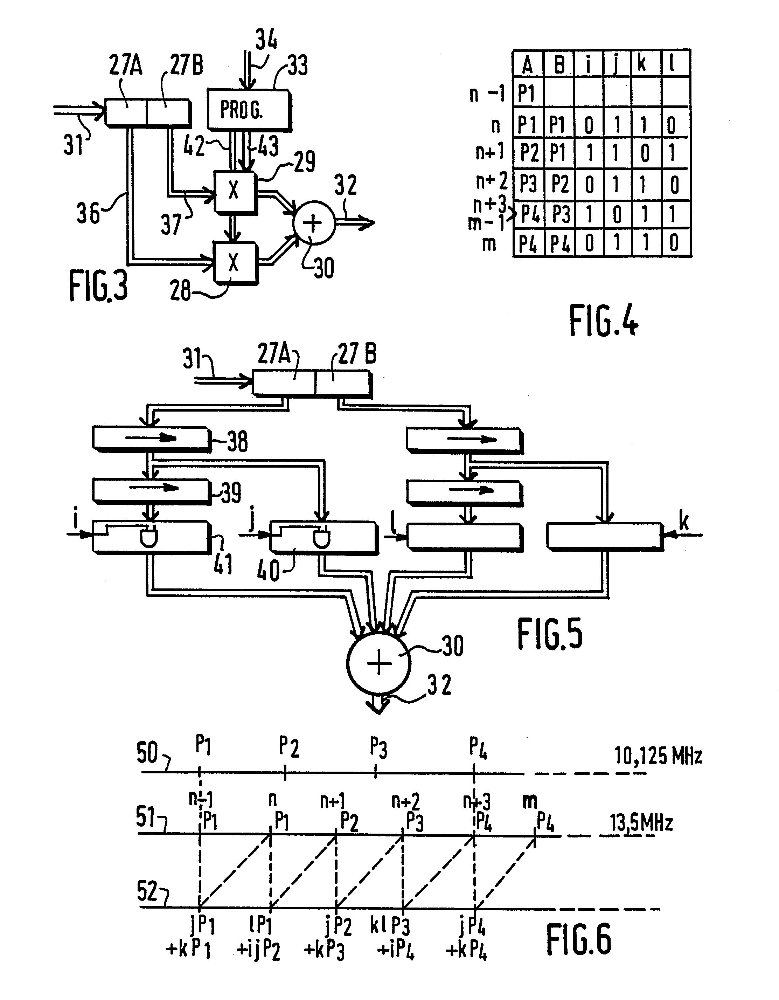

Selon une première variante de l'invention, deux dispositifs particuliers sont insérés, l'un au niveau de la croix 45, l'autre au niveau de la croix 46 sur les bus 25 et 26. Un de ces dispositifs est représenté sur la figure 3. Il comporte une entrée 31 qui est reliée à la sortie des mémoires 15, 16 ou 17, 18 et une sortie 32 qui est reliée à l'entrée du convertisseur numérique/analogique 19 ou 20.

L'entrée 31 est reliée à l'entrée d'un registre à décalage, qui comporte dans le présent exemple deux positions 27A, 27B. Chacune de ces positions est munie d'une sortie pour fournir le multiplet contenu dans cette position. Les sorties sont reliées par des bus 36, 37 à deux circuits de calcul 28, 29 qui appliquent une pondération à la valeur présentée, c'est-à-dire la multiplient numériquement par un coefficient. Ces coefficients sont programmables par un programmateur 33, qui modifie les coefficients de pondération au rythme normal de l'horloge de pixel. Le programmateur 33 est en pratique un constituant préexistant et connu des générateurs d'adresses, comportant des moyens de repérage de temps basés sur l'horloge, à laquelle il est relié par le conducteur 34, constituant auquel il est facile d'ajouter des éléments en nombre minime, pour fournir aux circuits 28, 29 les données de programmation de coefficients dont un exemple sera décrit plus loin, et pour fournir en outre un signal d'arrêt de l'incrémentation d'adresse de lecture.

Les valeurs pondérées en sortie des circuits de pondération 28, 29 sont amenées à un additionneur numérique 30 dont la sortie 32 fournit les pixels au convertisseur numérique/analogique 19 ou 20 de la figure 2. L'additionneur 30 réalise une addition au sens arithmétique du terme.

A l'entrée 31, reliée à la sortie d'une des mémoires de pixels 15, 16 ou 17, 18 est donc appliqué le multiplet lu dans cette mémoire à l'adresse indiquée par le générateur d'adresse correspondant 11 ou 12. La suppression de l'incrémentation d'adresse de lecture est faite avec une périodicité telle que la proportion entre le nombre total d'impulsions d'horloge avec ou sans incrémentation d'adresse et le nombre d'impulsions avec incrémentation soit égale au rapport de conversion de format.

La figure 4 illustre cette suppression périodique d'incrémentation d'adresse. Dans les deux premières colonnes est indiqué le contenu des position A et B du registre 27. Autemps d'horloge n-1 un premier pixel P1 est introduit dans A. Au temps suivant n, l'adresse de mémoire où est lu le multiplet n'est pas incrémentée. Le pixel P1 est donc lu à nouveau et introduit en A, cependant que le contenu précédent de A est poussé en B. Au temps suivant n+1 un pixel P2 est introduit en A et P1 est poussé en B, et ainsi de suite jusqu'au temps n+3. Au temps n+4 qui est indiqué par m pour marquer le début d'une nouvelle période, l'incrément d'adresse est supprimé et P4 est introduit une deuxième fois.

Cet ensemble d'opérations est ainsi reproduit de façon récurrente. Il y a trois impulsions d'horloge avec incrémentation : n+1, n+2, n+3, et une sans incrémentation : n, soit un nombre de quatre au total (avec ou sans incrémentation). Le nombre d'impulsions avec incrémentation est égal à 3. La proportion entre ces deux nombres est donc de 4/3 soit très précisément le rapport de conversion de format désiré.

Le rythme normal de l'horloge de pixel est de 13,5 MHz pour les mémoires de luminance, c'est-à-dire pour le dispositif placé en 46, et de 6,75MHz pour la couleur c'est-à-dire pour le dispositif placé en 45. Comme les fréquences d'échantillonage sont les mêmes, qu'il y ait ou non conversion de format, les filtres 47 et 48 ne requièrent aucune commutation.

La figure 5 représente fonctionnellement une forme particulière de réalisation des circuits de calcul 28, 29 de la figure 3. A partir de la position 27A du registre à décalage le multiplet est amené à un registre 38 où le multiplet est décalé d'un bit vers les poids faibles, ce qui revient à multiplier le nombre par 0,5. Le nombre obtenu est amené à un deuxième registre 39 identique au registre 38. On obtient donc en sortie le nombre initial multiplié par 0,25. Il est bien entendu possible de travailler de façon connue avec des bits supplémentaires à droite pour éviter de perdre de la précision lors des divisions par 2.

Les multiplets décalés de 1 et 2 bits sont amenés respectivement à deux ensembles 40, 41 de portes ET dans lesquels est symboliquement indiquée une seule porte ET, alors qu'ils en contiennent en réalité une par bit, ces portes étant ouvertes ou fermées par un signal respectivement j, i. Les multiplets en sortie des ensembles 40, 41 sont additionnés l'un à l'autre dans l'additionneur 30 déjà mentionné.

A partir de la position de registre 27B, le même traitement est appliqué par les éléments à droite de la figure, identiques à ceux utilisés pour la position 27A, à ceci près que les signaux d'ouverture des portes y sont appelés k pour le nombre multiplié par 0,5, et l pour le nombre multiplié par 0,25. L'additionneur 30 fait la somme arithmétique des quatre nombres obtenus.

Le tableau de la figure 4 indique pour chaque temps d'horloge les valeurs des signaux de commande i, j, k, l. Sachant que i et l correspondent à une pondération de 0,25 et j et k à une pondération de 0,5, il est facile de vérifier qu'au temps n ou m correspondant à l'absence d'incrémentation d'adresse les pondérations appliquées aux valeurs disponibles sur la première sortie du registre la plus proche de l'entrée, et sur la deuxième sortie, sont respectivement de 0,5 et 0,5, et aux temps d'horloge suivants de 0,75 (obtenu par addition de 0,5 et 0,25) et 0,25, puis 0,5 et 0,5, puis 0,25 et 0,75.

Le programmateur 33 de la figure 3 est chargé de fournir les valeurs i, j, k, l. Un tel programmateur est bien connu en soi : il peut être fait au moyen d'une mémoire morte dans laquelle on lit successivement les quatre groupes de valeurs différentes. On peut aussi remarquer que les colonnes i et l de la figure 4 lues verticalement présentent tour à tour des 1 et des 0 et que les colonnes j, k présentent un zéro tous les quatre temps, tout ceci étant facile à réaliser au moyen de compteurs. De même les moyens pour supprimer périodiquement l'incrémentation sont réalisés facilement au moyen d'un compteur qui délivre tous les quatre temps un signal inhibant l'avance des générateurs d'adresse 11, 12.

La figure 6 illustre ce qui se passe au cours du temps. Sur la première ligne est représenté une lecture de quatre pixels à 10,125 MHz nécessitant une commutation des filtres. Sur la deuxième ligne est représentée une lecture selon l'invention à une fréquence de 13,5 MHz où les pixels P1 et P4 sont lus deux fois (les indices de temps n, m de la figure 4 y sont rappelés). A la ligne du bas sont indiqués à chaque temps les signaux obtenus, où i, l représentent 0,25, où j, k représentent 0,5 et où "ij" ou "kl" représentent 0,75. On voit que chaque pixel est représenté par une moyenne de deux pixels de la première ligne entre lesquels il est placé, avec une pondération inversement proportionnelle à la distance. Le pixel jP1 + kP1 est donc égal à P1 par addition de 0,5 P1 + 0,5 P1 ! Le même résultat pourrait être obtenu avec une pondération de un, mais ceci nécessiterait une série de portes ET supplémentaires pour contrôler le passage direct (sans pondération) des multiplets. Le mode de réalisation décrit plus haut est donc plus simple.

Il faut noter que le schéma de la figure 3, donné ici à titre d'exemple d'une réalisation très simple, peut aussi comporter plus de deux positions et être réalisé avec des coefficients différents de 0,25 et 0,5 pour les circuits 28, 29, d'autres coefficients pouvant procurer un contenu spectral du signal issu des convertisseurs 19 et 20, plus facile à filtrer.

Dans le cas où le signal doit être désembrouillé, le désembrouillage peut être réalisé au moyen des mémoires 15 à 18. Mais des mémoires 13, 14 supplémentaires peuvent aussi être placées à cet effet en amont des mémoires 15 à 18. Dans ce cas une deuxième variante de réalisation de l'invention particulièrement intéressante peut être utilisée. Les mémoires 13, 14 sont insérées sur le trajet des multiplets entre les bus 23 et 24. Comme les mémoires de démultiplexage, elles sont deux, utilisées tour à tour en lecture et en écriture. Les ordres d'écriture ou de lecture et les adresses correspondantes sont fournies par des générateurs d'adresse d'écriture 8 et de lecture 9. Ces mémoires permettent de relire des portions de mémoire dans un ordre différent de l'ordre utilisé à l'écriture afin de permuter des parties de lignes. Elles sont écrites et lues à 20,25 Mhz, avec successivement les parties de couleur et de luminance.

Un dispositif selon l'invention fonctionnant à 20,25 MHz, inséré au niveau de la croix 44 sur le bus 24 permet d'obtenir l'effet recherché de dilatation, avec un seul dispositif au lieu des deux qui étaient utilisés dans la première variante de réalisation.

**Revendications**

1. Dispositif pour la dilatation d'une image dans une direction, faisant partie d'un appareil qui reproduit une image selon un mode d'exploration par lignes et trames, à partir d'un signal dans lequel chaque ligne donne lieu à un multiplexage temporel de signaux de différence de couleur et de luminance, l'appareil étant muni d'au moins une mémoire de pixels pour emmagasiner sous forme numérique des multiplets représentant chacun une valeur de définition d'un pixel, et d'un générateur d'adresses qui procède à un calcul d'incrémentation d'adresse, au rythme d'une horloge à fréquence de pixels, et fournit à chaque instant correspondant à la reproduction d'un pixel, l'adresse, dans ladite mémoire, du multiplet définissant ce pixel, caractérisé en ce qu'il est muni d'un registre à décalage pour recevoir à son entrée le multiplet lu dans la mémoire à l'adresse indiquée par le générateur d'adresses, registre muni d'une sortie par position pour fournir à chaque fois le multiplet contenu dans cette position, en ce que ces sorties sont reliées chacune à un circuit de calcul pour appliquer une pondération à la valeur représentée par le multiplet, en ce que les sorties de ces circuits de calcul sont reliées à des entrées d'un circuit d'addition dont la sortie fournit les valeurs de pixels, en ce que les coefficients de pondération des circuits de calcul sont modifiés au rythme de l'horloge de pixels qui a la même vitesse que pour une image non dilatée, et en ce que le générateur d'adresses est muni de moyens pour supprimer périodiquement l'incrémentation d'adresse de lecture avec une périodicité telle que la proportion entre le nombre total d'impulsions d'horloge avec ou sans incrémentation d'adresse et le nombre d'impulsions avec incrémentation soit égale au rapport de conversion de format.

2. Dispositif selon la revendication 1, caractérisé en ce que l'adresse fournie par le générateur d'adresse est incrémentée trois fois de suite, après quoi l'incrémentation est arrêtée pour une quatrième impulsion d'horloge.

3. Dispositif selon la revendication 2, caractérisé en ce que le registre à décalage comporte deux positions et chaque sortie du registre à décalage est reliée à un ensemble de deux circuits de pondération de poids respectifs 0,25 et 0,5, chacun d'eux étant relié en cascade avec un circuit de sortie, chaque ensemble étant susceptible par conséquent de fournir par la combinaison de l'action des deux portes une pondération de zéro ou de 0,25 ou de 0,5 ou de 0,75, et en ce qu'au temps d'horloge correspondant à l'absence d'incrémentation d'adresse les pondérations appliquées aux valeurs disponibles sur la première sortie du registre la plus proche de l'entrée, et sur la deuxième sortie, sont respectivement de 0,5 et 0,5, et aux temps d'horloge suivants de 0,75 et 0,25, puis 0,5 et 0,5, puis 0,25 et 0,75.

4. Système de réception de télévision selon le standard MAC comportant, avant le démultiplexage temporel, des mémoires de désembrouillage et un générateur d'adresse associé, caractérisé en ce qu'il comporte un dispositif selon l'une quelconque des revendications précédentes, associé à ces mémoires et à leur générateur d'adresse de lecture.

5. Système de réception de télévision selon le standard MAC comportant une mémoire de luminance et une mémoire de différence de couleur et leurs générateurs d'adresse associés, caractérisé en ce qu'il comporte un premier dispositif selon l'une quelconque des revendications 1 à 3, associé à la mémoire de luminance et au générateur d'adresse de lecture de luminance, et un deuxième dispositif associé à la mémoire de couleur et au générateur d'adresse de lecture de couleur.

A
B
C
D
FIG 1
1
2
3
X
4
23
A/D
7
8
W/ADD
RAM 1
RAM 2
9
R/ADD
6
5
DMX
13
CLK
14
44
34
24
10
RAM-Y 1
RAM-Y 2
W/ADD
RAM-C 1
RAM-C 2
R/ADD_Y
11
R/ADD_C
18
15
16
12
17
46
25
45
26
D/A
19
D/A
20
47
48
21
FIG. 2
M X
22
R
G
B

34
27A
27B
33
PROG.
31
42
43
29
X
32
36
37
X
30
FIG.3
28
FIG.4
31
27A
27B
38
39
i
j
l
k
41
40
FIG.5
30
32
50
P1
P2
P3
P4
10,125 MHz
n-1
n
n+1
n+2
n+3
m
51
P1
P1
P2
P3
P4
P4
13,5MHz
52
jP1 +kP1
lP1 +ijP2
jP2 +kP3
klP3 +iP4
jP4 +kP4
FIG.6


|  | A | B | i | j | k | l |
|---|---|---|---|---|---|---|
| n -1 | P1 |  |  |  |  |  |
| n | P1 | P1 | 0 | 1 | 1 | 0 |
| n+1 | P2 | P1 | 1 | 1 | 0 | 1 |
| n+2 | P3 | P2 | 0 | 1 | 1 | 0 |
| n+3 / m-1 | P4 | P3 | 1 | 0 | 1 | 1 |
| m | P4 | P4 | 0 | 1 | 1 | 0 |

FIG.4

Office européen des brevets

# RAPPORT DE RECHERCHE EUROPEENNE

Numero de la demande

EP 88 20 0698

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | WO-A-8 605 644 (SCIENTIFIC ATLANTA INC.)<br>* Figures 4-7; abrégé; page 8, ligne 2 - page 12, ligne 19 *<br>--- | 1 | H 04 N 11/08 |
| A | GB-A-2 145 605 (R.C.A.)<br>* Figures 12-14; abrégé; page 7, ligne 80 - page 9, ligne 87 *<br>----- | 1 | |
| | | | **DOMAINES TECHNIQUES RECHERCHES (Int. Cl.4)** |
| | | | H 04 N 11 |

Le présent rapport a été établi pour toutes les revendications

| Lieu de la recherche | Date d'achèvement de la recherche | Examinateur |
|---|---|---|
| LA HAYE | 21-07-1988 | VAN ROOST L.L.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)